# EUROPEAN PATENT SPECIFICATION

(11) **EP 2 322 417 B1**
(45) Date of publication and mention of the grant of the patent: **19.09.2012**
(21) Application number: 10191208.7
(22) Date of filing: 15.11.2010
(51) Int. Cl.: B62M 3/00

(54) **A cartridge bottom bracket for a bicycle**
Kartuschentretlager für ein Fahrrad
Support inférieur de cartouche pour bicyclette

(30) Priority: 17.11.2009 IT TO20090885
(43) Date of publication of application: 18.05.2011
(73) Proprietor: Aktiebolaget SKF, 415 50 Göteborg (SE)
(72) Inventor: Mola, Roberto, I-10129, TORINO (IT); Restivo, Riccardo, I-10144, TORINO (IT); Sansone, Alessandro, I-10064, PINEROLO (Torino) (IT); Scaltriti, Gianpiero, I-10135, TORINO (IT)
(74) Representative: Fioravanti, Corrado

(56) References cited:
- GB-A- 2 385 641
- US-A- 5 281 003
- US-A1- 2002 096 015

## Description

The present invention relates to a cartridge bottom bracket for a bicycle.

The bottom bracket is a mechanical device that connects the cranks to the frame of the bicycle and, in its less evolved form, comprises a spindle, connected to the opposite ends of which are the cranks, two caps designed to be screwed to the frame to secure the spindle, and two sets of rolling-contact bodies held in place by respective cages and interposed between the caps and the spindle to allow the spindle to rotate with respect to the frame.

US 5 281 003 is an example of prior art bottom bracket, corresponding to the preamble of claim 1.

The two caps, the bearings and the spindle can be separate elements, as was once the norm, or can be preassembled in a sealed cartridge, which is known to comprise:
- a cylindrical pipe which sits around the spindle and houses inside itself the two sets of rolling-contact bodies with their respective cages;
- a first cap, which is fixed to a first end of the cartridge, and has an external thread for screwing to the bicycle frame; and
- a second cap, which mounts onto a second end of the cartridge, and has its own external thread to allow it to be screwed to the frame of the bicycle and to lock the cartridge with respect to the frame.

Cartridge-type bottom brackets of the type described above may be quicker and easier to fit than earlier bottom brackets, but are still rather complex, at least from the manufacturing point of view, and are still relatively expensive to produce. For example, in bottom brackets of the type described above, the outside of the spindle has to be machined to produce, for each end, a shoulder for the axial positioning either of the caps or of each set of rolling-contact bodies, and also has to be machined subsequently to be able to produce at each end a plurality of sloping planes for its connection to the cranks. This surface machining of the spindle also adds to the costs of manufacture of this component.

Lastly, the end portions of the spindles are not only placed in contact with the metal of the cranks, but are also subject to the action of external agents, and therefore, in order to increase the life of the bottom bracket, spindles currently in use require surface treatment and are predominantly zinc-coated. It is therefore sufficiently clear that these additional surface treatments which must be applied to the spindles only further increase the manufacturing costs of the bottom brackets described above.

It is an object of the present invention to provide a cartridge bottom bracket for a bicycle which, without altering the necessary characteristics of strength and stiffness, is nonetheless cheap and simple to produce.

The present invention provides a cartridge bottom bracket for bicycle, the bottom bracket being such that it can be placed in a seat in a bicycle frame, and comprising a spindle having two opposite free ends, and a sealed cartridge positioned approximately centrally along the length of the spindle so as to leave the two opposite ends exposed; the bottom bracket being characterized in that the sealed cartridge comprises two sealed rolling-contact bearings mounted on the spindle at the opposite ends of said cartridge, while an internal distance piece and a pipe are interposed between the two rolling-contact bearings so as to define the distance between the bearings; the spindle comprising, for each free end, a shaped cap mounted axially against the corresponding bearing and completely covering the corresponding free end of the spindle.

The invention will now be described with reference to the appended drawings, which show a non-restrictive example of the embodiment, in which:
- Figure 1 is a perspective view of a preferred embodiment of the cartridge bottom bracket for a bicycle according to the present invention;
- Figure 2 shows, in section and enlarged, the bottom bracket seen in Figure 1; and
- Figure 3 is an end view of the bottom bracket shown in Figure 2.

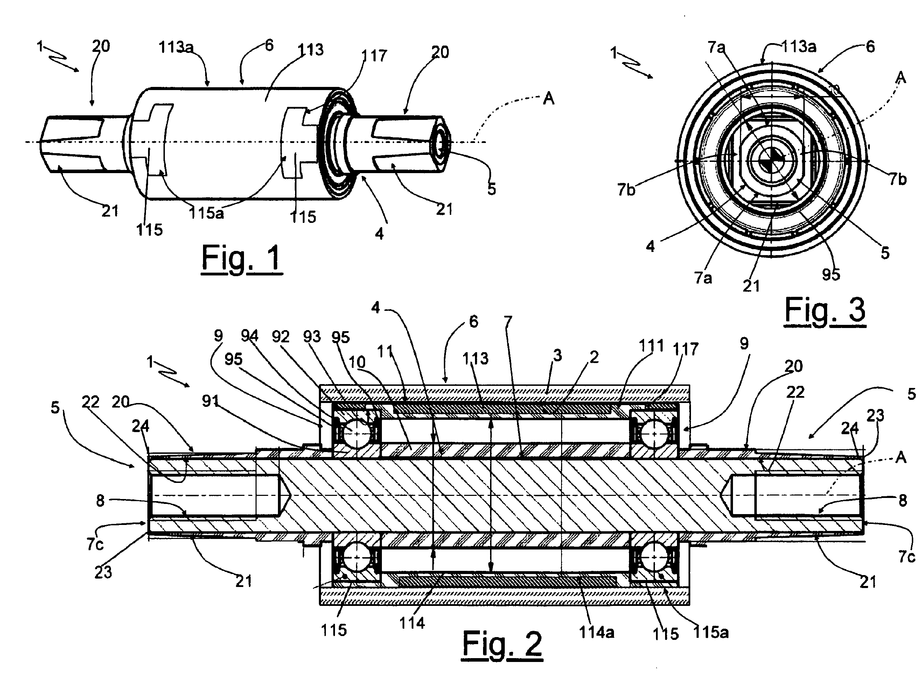

Referring to Figure 1, reference 1 is a general reference for a cartridge bottom bracket for a bicycle.

The bottom bracket 1 is such that it can be placed in a tubular seat 2 in a bicycle frame 3 (known and not shown) to connect together two cranks (known and not shown).

The bottom bracket 1 comprises:
- a spindle 4 having two opposite end portions 5, and
- a sealed cartridge 6 that is positioned approximately centrally along the length of the spindle 4 so as to leave the two end portions 5 exposed on the outside.

Thus, as also illustrated in Figures 2 and 3, the spindle 4 has a longitudinal axis A and is defined by an essentially cylindrical outer surface 7 that possesses, at least at the two end portions 5, two cylindrical faces 7a and two flat faces 7b arranged on opposite sides of the axis A, alternating in position with the cylindrical faces 7a. The spindle 4 also has, for each end portion 5, a corresponding threaded internal seat 8 that extends along the axis A inside the spindle 4 and is able to accommodate a screw (not shown) for fastening the corresponding crank (not shown).

The sealed cartridge 6 comprises two rolling-contact bearings 9, an inner distance piece 10 and an outer pipe 11. These are interposed axially between the two bearings 9 so as to define the distance between the bearings 9.

Each bearing 9 has an inner ring 91 mounted on the surface 7 axially against the distance piece 10, an outer ring 92 inserted into a corresponding annular seat 93 in the pipe 11, and a plurality of rolling bodies 94 interposed between the inner ring 91 and the outer ring 92. Lastly, each bearing 9 comprises two seals 95 interposed between the inner ring 91 and the outer ring 92 to seal that bearing 9 and, simultaneously, also the cartridge 6, the interior of which is therefore completely isolated from the exterior. This eliminates both the risk of any form of contamination getting in and the need for maintenance.

In order to give the bottom bracket 1 a longer life and make it more reliable, the spindle 4 comprises, for each end portion 5, a shaped cap 20: this is placed axially against the inner ring 91 of the corresponding bearing 9, and covers and completely protects the corresponding end portion 5. In other words, the surface 7 of the spindle 4 is covered without any gaps by the two caps 20, by the inner rings 91 of the bearings 9 and by the distance piece 10, so that the spindle 4 does not need any special anti-corrosion surface treatments.

Each cap 20 is angularly integral with the corresponding end portion 5, and has an internal through-seat 22 shaped to copy the corresponding two cylindrical faces 7a and the two flat faces 7b, which therefore act as anti-rotation elements for each cap 20 with respect to the spindle 4. Each cap 20 is also shaped externally and is provided, depending on the application, with two or four outer surfaces 21 at regular intervals around the axis A which are inclined with respect to the axis A to prevent any relative rotation of the spindle 4 with respect to the cranks (not shown) when the caps 20 are engaged in said cranks (not shown).

Lastly, each cap 20 comprises a folded edge 23 extending around the terminal edges 24 of the surfaces 21 and partially covers a corresponding end surface 7c of the spindle 4 through which the seat 8 is formed. In the example of an embodiment illustrated in Figure 2, the edge 23 covers just a peripheral portion of the corresponding surface 7c, but, in an embodiment that is not shown but easily derived from the above description, the edge 23 may extend radially towards the axis A over the corresponding surface 7c as far as the entrance of the corresponding seat 8.

Each cap 20 is made of plastic co-moulded directly onto the corresponding end portion 5 of the spindle 4, or, alternatively, is made beforehand, in its final shape, from sintered metal, such as steel, and is then mounted on the corresponding end portion 5, or, also alternatively, is made beforehand, in its final shape, from metal, such as aluminium, and is mounted on the corresponding free end 5 of the spindle 4.

Each of the three alterative embodiments of the caps 20 has its own advantages: for example, a cap 20 made of co-moulded plastic is very inexpensive but has limited strength, while a cap 20 of sintered steel is very strong but comparatively expensive. A cap 20 made of aluminium represents a solution midway between the two previous solutions in that it has moderate strength and is also moderately inexpensive.

If the caps 20 are co-moulded directly onto the spindle 4, the two bearings 9 and the distance piece 10 will be preassembled on said spindle 4 and held in their pre-assembly position during the co-moulding process.

In order to reduce still further the cost of producing the bottom bracket 1 described above, the pipe 11 may also be made entirely of plastic co-moulded directly onto the bearings 9 in such a way as to form the seats 93 directly during the co-moulding process in contact with the outer rings 92.

However, as illustrated in the accompanying figures, the pipe 11 comprises:
- a reinforcement 111 defining, on each side of the cartridge 6, an annular seat 93 axially open towards the outside of said cartridge 6, and
- a body 113 made of plastic integral with the reinforcement 111 and co-moulded onto this reinforcement 111.

The reinforcement 111 comprises a central cylindrical body 114 and, at each side of the cartridge 6, at least three stop or catch elements 115 that extend axially out from the body 114 and are uniformly distributed around the axis A to define the seat 93 of the corresponding bearing 9.

The body 114 is defined radially outwardly by a cylindrical surface 114a coaxial with the axis A and having a diameter whose dimensions are between an outside diameter of the outer ring 91 and a diameter of the centres of the rolling bodies 94, while the stop elements 115 are defined radially outwardly by a cylindrical surface 115a with a diameter whose dimensions are equal to the dimensions of a diameter of a cylindrical outer surface 113a of the body 113.

The stop elements 115 define between each other and with the corresponding outer rings 92 spaces 117 complementary in shape to the shape of the stop elements 115, and define with the surface 114a a cylindrical annular chamber which, like the spaces 117, is filled with plastic during the co-moulding thus defining, together with said spaces 117, the body 113.

In practice the reinforcement 111 is covered almost completely by the body 113 with the exception of the stop elements 115, which come both radially and axially to the outside of the body 113 while remaining within the confines of the dimensions of said body 113.

The presence of the stop elements 115 not only gives the bottom bracket 1 sufficient rigidity for most applications but also makes the positioning of the bearings 9 even more precise. However, even if the pipe 11 is made entirely by co-moulding, the bottom bracket 1 would still have sufficient stiffness for many applications, and the positioning of the bearings 9 would still be precise because it would be ensured by the pre-assembly in the mould.

In both of the alternative cases described above, co-moulding of the inner pipe 11, or of just the body 113 can be done at the same time as co-moulding of the caps 20, where the latter are also co-moulded onto the spindle 4.

The plastic from which the pipe 11, or the body 113, or the caps 20 can be made may be either acrylonitrile butadiene styrene (ABS) or polypropylene (PP). Although these are of different base polymers, they are both low-cost thermoplastics that give excellent results when injection moulded.

The bottom bracket 1 described above, once inserted into the seat 2, is locked axially by two threaded caps (not shown), of which a first threaded cap has an axial stop on the frame 3 and screws onto said frame 3, while a second threaded cap has an axial stop on said bottom bracket 1 and is similarly screwed to the frame 3, closing the bottom bracket 1 tightly and locking it axially within the seat 2.

Said threaded assembly caps, like the caps 20 and the other components of the bottom bracket 1, are symmetrical about a mid-plane orthogonal to the axis A and corresponding to a longitudinal plane of the bicycle: hence the symmetry of the components of the bottom bracket 1 also provides symmetry of assembly and of the bottom bracket 1 itself with respect to the longitudinal plane of the bicycle.

It will be clear from the foregoing that the bottom bracket 1 described above has a simple structure, both from the structural point of view and from the point of view of manufacture, and yet possesses characteristics of stiffness and resistance to external contamination comparable with if not better than the characteristics of more sophisticated bottom brackets.

The possibility of fitting the bottom bracket 1 with sealed rolling-contact bearings 9 makes the cartridge 6 totally impermeable, giving the bottom bracket 1 a long life. Furthermore, by completely protecting the entire spindle 4 by the use of the components of the bottom bracket 1 themselves, such as specifically the caps 20, and by also giving the caps 20 the functions of shape for connection to the cranks, spindles 4 of very simple shape can be used without the need for special coatings. This further reduces the cost of the entire product.

The invention is not intended to be limited to the embodiments described and illustrated herein, which are to be regarded as examples of embodiments of the cartridge bottom bracket for a bicycle, and which are open to further modifications in respect of the shapes and arrangements of parts, details of construction, and assembly.

## Claims

1. A cartridge bottom bracket (1) for bicycle, the bottom bracket (1) being such that it can be placed in a seat (2) in a bicycle frame (3), and comprising a spindle (4) having two opposite free ends (5), and a sealed cartridge (6) positioned approximately centrally along the length of the spindle (4) so as to leave the two free ends (5) exposed; the bottom bracket (1) being **characterized in that** the sealed cartridge (6) comprises two sealed rolling-contact bearings (9) mounted on the spindle (4) at the free ends (5) of said cartridge (6), while an internal distance piece (10) and a pipe (11) are interposed between the two rolling-contact bearings (9) so as to define the distance between the bearings (9); the spindle (4) comprising, for each free end (5), a shaped cap (20) mounted axially against the corresponding bearing (9) and completely covering the corresponding free end (5) of the spindle (4).

2. A bottom bracket according to Claim 1, **characterized in that** the spindle (4) is defined outwardly by a cylindrical surface (7) that possesses, at least at the corresponding free ends (5), two opposite flat faces (7b), and is covered without any gaps by the two caps (20), by internal rings (91) of the bearings (9), and by the distance piece (10).

3. A bottom bracket according to Claim 2, **characterized in that** each cap (20) is angularly integral with the corresponding free end (5) and has at least two anti-rotation outer surfaces (21) for non-rotatable engagement in the corresponding cranks.

4. A bottom bracket according to Claim 3, **characterized in that** each cap (20) has four equiangular anti-rotation external surfaces (21) which are inclined with respect to the spindle (4) so as to be engaged non-rotatably in the corresponding cranks.

5. A bottom bracket according to Claim 3 or 4, **characterized in that** each cap (20) is made of plastic co-moulded directly onto the corresponding free end (5) of the spindle (4), or is made of sintered metal and is mounted on the corresponding free end (5) of the spindle (4), or is made from metal, such as aluminium, and is mounted on the corresponding free end (5) of the spindle (4).

6. A bottom bracket according to Claim 5, **characterized in that** the pipe (11) is made entirely of plastic and is co-moulded directly onto said rolling-contact bearings (9).

7. A bottom bracket according to Claim 6, **characterized in that** the pipe (11) comprises:
- a reinforcement (111) having an annular seat (93) which is axially open for each bearing (9), and
- a plastic body (113) co-moulded onto said reinforcement (111).

## Patentansprüche

1. Patronentretlager (1) für Fahrrad, wobei das Tretlager (1) so gestaltet ist, dass es in einer Aufnahme (2) in einem Fahrradrahmen (3) angeordnet werden kann, und dass es eine Tretlagerwelle (4), die zwei gegenüberliegende freie Enden (5) aufweist, und eine verschlossene Patrone (6), die annähernd zentrisch entlang der Länge der Tretlagerwelle (4) positioniert ist, um die zwei freien Enden (5) freiliegen zu lassen, umfasst; wobei das Tretlager (1) **dadurch gekennzeichnet ist, dass** die verschlossene Patrone (6) zwei verschlossene Wälzlager (9) umfasst, die auf der Tretlagerwelle (4) an den freien Enden (5) der Patrone (6) montiert sind, wobei ein interner Abstandshalter (10) und eine Röhre (11) zwischen den beiden Wälzlagern (9) eingefügt sind, um den Abstand zwischen den Lagern (9) zu definieren; wobei die Tretlagerwelle (4) für jedes freie Ende (5) eine geformte Kappe (20) umfasst, die axial an dem entsprechenden Lager (9) montiert ist und die das entsprechende freie Ende (5) der Tretlagerwelle (4) vollständig bedeckt.

2. Tretlager nach Anspruch 1, **dadurch gekennzeichnet, dass** die Tretlagerwelle (4) nach außen durch eine zylindrische Oberfläche (7) definiert ist, die wenigstens an den entsprechenden freien Enden (5) zwei gegenüberliegende ebene Flächen (7b) besitzt, und ohne jeden Zwischenraum durch die zwei Kappen (20) durch innere Ringe (91) der Lager (9) und durch den Abstandshalter (10) bedeckt wird.

3. Tretlager nach Anspruch 2, **dadurch gekennzeichnet, dass** jede Kappe (20) in Winkelrichtung mit dem entsprechenden freien Ende (5) einteilig ausgebildet ist und wenigstens zwei drehfeste Außenflächen (21) für einen drehfesten Eingriff in die entsprechenden Tretkurbeln aufweist.

4. Tretlager nach Anspruch 3, **dadurch gekennzeichnet, dass** jede Kappe (20) vier gleichwinkelige drehfeste Au-βenflächen (21) aufweist, die in Bezug auf die Tretlagerwelle (4) geneigt sind, um drehfest mit den entsprechenden Tretkurbeln in Eingriff zu sein.

5. Tretlager nach Anspruch 3 oder 4, **dadurch gekennzeichnet, dass** jede Kappe (20) aus Kunststoff hergestellt ist, der direkt auf dem entsprechenden freien Ende (5) der Tretlagerwelle (4) angegossen ist, oder aus Sintermetall hergestellt ist und auf dem entsprechenden freien Ende (5) der Tretlagerwelle (4) befestigt ist, oder aus Metall, z. B. Aluminium, hergestellt ist und auf dem entsprechenden freien Ende (5) der Tretlagerwelle (4) befestigt ist.

6. Tretlager nach Anspruch 5, **dadurch gekennzeichnet, dass** die Röhre (11) vollständig aus Kunststoff hergestellt ist und direkt auf den Wälzlagern (9) angegossen ist.

7. Tretlager nach Anspruch 6, **dadurch gekennzeichnet, dass** die Röhre (11) Folgendes umfasst:
- eine Verstärkung (111), die eine ringförmige Aufnahme (93) aufweist, die axial für jedes Lager (9) offen ist, und
- einen Kunststoffkörper (113), der auf der Verstärkung (111) angegossen ist.

## Revendications

1. Jeu de pédalier à cartouche (1) pour une bicyclette, le jeu de pédalier (1) étant tel qu'il puisse être placé dans un logement (2) dans un cadre de bicyclette (3), et comprenant un axe (4) possédant deux extrémités libres opposées (5), ainsi qu'une cartouche scellée (6) positionnée approximativement de manière centrale le long de la longueur de l'axe (4) de manière à laisser à découvert les deux extrémités libres (5) ; le jeu de pédalier (1) étant **caractérisé en ce que** la cartouche scellée (6) comprend deux paliers à roulement scellés (9) montés sur l'axe (4) au niveau des extrémités libres (5) de ladite cartouche (6), tandis qu'une pièce d'écartement interne (10) et un tube (11) sont interposés entre les deux paliers à roulement (9) de manière à définir la distance entre les paliers (9) ; l'axe (4) comprenant, pour chaque extrémité libre (5), un capuchon façonné (20) monté axialement contre le palier correspondant (9) et recouvrant complètement l'extrémité libre correspondante (5) de l'axe (4).

2. Jeu de pédalier selon la revendication 1, **caractérisé en ce que** l'axe (4) est défini vers l'extérieur par une surface cylindrique (7) qui possède, au moins au niveau des extrémités libres correspondantes (5), deux faces planes opposées (7b), et est recouverte sans aucun interstice par les deux capuchons (20), par des bagues internes (91) des paliers (9), et par la pièce d'écartement (10).

3. Jeu de pédalier selon la revendication 2, **caractérisé en ce que** chaque capuchon (20) fait angulairement partie intégrante de l'extrémité libre correspondante (5) et possède au moins deux surfaces extérieures anti-rotation (21) destinées à venir en prise de manière non rotative dans les manivelles correspondantes.

4. Jeu de pédalier selon la revendication 3, **caractérisé en ce que** chaque capuchon (20) possède quatre surfaces externes anti-rotation équiangulaires (21) qui sont inclinées par rapport à l'axe (4) de manière à être en prise de manière non rotative dans les manivelles correspondantes.

5. Jeu de pédalier selon la revendication 3 ou 4, **caractérisé en ce que** chaque capuchon (20) est constitué de plastique co-moulé directement sur l'extrémité libre correspondante (5) de l'axe (4), ou est constitué de métal fritté et est monté sur l'extrémité libre correspondante (5) de l'axe (4), ou est constitué de métal, tel que l'aluminium, et est monté sur l'extrémité libre correspondante (5) de l'axe (4).

6. Jeu de pédalier selon la revendication 5, **caractérisé en ce que** le tube (11) est constitué entièrement de plastique et est co-moulé directement sur lesdits paliers à roulement (9).

7. Jeu de pédalier selon la revendication 6, **caractérisé en ce que** le tube (11) comprend .
- un renforcement (111) possédant un logement annulaire (93) qui est axialement ouvert pour chaque palier (9), et
- un corps plastique (113) co-moulé sur ledit renforcement (111).
